# EUROPEAN PATENT SPECIFICATION

(11) **EP 4 370 817 B1**
(45) Date of publication and mention of the grant of the patent: **01.04.2026**
(21) Application number: 22841606.1
(22) Date of filing: 27.06.2022
(51) Int. Cl.: F16K 31/122, F16K 24/02, F16K 31/60, F16K 35/06

(54) **SAFETY VALVE**
SICHERHEITSVENTIL
SOUPAPE DE SÉCURITÉ

(30) Priority: 12.07.2021 IL 28480621
(43) Date of publication of application: 22.05.2024
(73) Proprietor: Ham-Let (Israel-Canada) Ltd., 1710801 Nof Hagalil (IL)
(72) Inventor: HORNER, Gal, 1710801 NOF HAGALIL (IL)
(74) Representative: Murgitroyd & Company
(86) International application number: PCT/IL2022/050689
(87) International publication number: WO 2023/286045

(56) References cited:
- US-A- 3 101 924
- US-A- 3 429 321
- US-B2- 7 131 629
- US-B2- 7 131 629
- US-B2- 7 802 771

## Description

### BACKGROUND

There is a reliance on control devices such as valves where the flow of gases and liquids through pipework needs regulating. These valves and gases/liquids [generally referred to as process fluids] find a wide range of applications in processes including bulk chemical manufacturing, oil refining and the pharmaceutical and semiconductor industries. Similar valves, albeit generally on a smaller scale, are used in research, and even in domestic plumbing and heating systems in car engines, for example.

An air-operated valve is a device that uses compressed air to control or modulate the flow of media such as process fluid through a pipework.

The media that flows through the valve ports may be gas, which can often be hazardous and toxic.

Often, particularly where inflammable, highly toxic or otherwise dangerous substances are used, the air-operated valves must have a fail-safe, and it is critical to ensure that they may be locked in the fully closed position such that flow cannot be restarted inadvertently, such as by a mechanical vibration or by accidental or unauthorized human intervention, for example. This may be achieved by using lockable valves. If the valve is air-to-open (ATO) then it will fail closed (FC), also known as normally closed (NC); while if the valve is designed to be air-to-close (ATC) then it will fail open (FO).

Some valves include padlocks or the like, to lock the valve handle in either fully open or fully closed positions. The locking may hinder tampering and unauthorized manipulation of the valves but if the valve requires servicing or another manual manipulation the valve is unlocked and is susceptible to inadvertent switching from open to close or close to open. In addition, the locking does not help if the closing/opening themselves malfunction, for example due to failure to vent air trapped in the valve, or failure to completely stop flow of pressurized air into the valve, each of which might open the valve or keep it open when intended to be closed. US Patent number 7,131,629 shows such a valve and is therefore particularly useful for understanding the background to the present invention; it discloses an automatic-and-manual operation composite valve which includes a valve main body into which an air is supplied and from which the air is discharged, a piston provided within the valve main body to be vertically movable by means of the air supplied or discharged and a snapping force of a spring attached to the piston, a valve body provided within the valve main body, and opened and closed by the piston, an air switch valve portion provided within the valve main body for switching air supply and air discharge and a manual operation mechanism portion for operating the air switch valve portion.

Hence there is still a need for an internal safety feature preventing an inadvertent change in status of the valve and ensuring that the valve is and remains in a desired state, by providing a mechanism that allows for simultaneous manual mechanical closing of a NC valve while blocking and venting of the pressurized air used to keep the valve open. The following described invention addresses this issue in a safe and reliable manner.

### SUMMARY

The present invention provides a normally closed valve in accordance with claim 1.

The valve and mechanism may also be capable of preventing inadvertent closing of the valve when the valve is intended to be in an open state.

Such capability may also include the valve being configured to simultaneously allow all of the following: internally locking the valve with mechanical means, blocking the air supply used for pneumatically operating the valve, and venting the valve [all together closing the valve], for example all by a single manual manipulation of the valve in a first direction.

"Locking the valve with mechanical means" refers to transmitting force via a chain of components in physical contact with each other such as to lock the valve.

In addition, such capability may also include the valve being configured to simultaneously allow all the following: mechanically internally unlocking the valve, connecting the air supply used for pneumatically operating the valve, and reducing or eliminating venting of the valve [all together opening the valve], for example all by a single manual manipulation of the valve in a second direction which may be opposite to the first direction.

The valve may be further configured to allow preventing inadvertent opening of a closed valve by allowing the valve to remain closed over a limited range of motion in manipulation of the valve in the second direction.

The valve may be further configured to allow preventing inadvertent closing of an opened valve by allowing the valve to remain open over a limited range of motion in manipulation of the valve in the first direction.

The valve may be even further configured to allow manual locking of the valve, for example by locking an external valve handle with a lock, the locking including preventing said manipulation of the valve.

A valve may be provided whereby a single rotation of an external handle carries out the before mentioned functions. In a preferred embodiment the described mechanism can be applied [retrofitted] to many different designs of presently available, on the market, pneumatically operated valves, optionally through minor design adjustments and scaling of both the mechanism and valve.

The mechanism may comprise:
a control shaft which has a lower control shaft duct, and which is rotatable by means of manipulating an external handle with respect to an internal axis, and
a stationary threaded stopper which has a stopper duct, and a disable mechanism disposed therein.

The disable mechanism includes a disable mechanism duct extending from the stopper duct to outside the stopper.

The control shaft and the threaded stopper may be urged together by resilient means.

The valve is open when the lower duct and the disable mechanism duct are aligned. Compressed air can pass from the disable mechanism duct to the lower duct. The compressed air passing through the lower duct, may for example force a spring away from pressing on a diaphragm that lies on a seat that has process fluid inlet and outlet, thus allowing the process fluid to pass via the valve.

Manipulating the handle, thereby rotating the control shaft, may cause several things to simultaneously and synergistically occur:
1. the lower duct becomes misaligned with the disable mechanism duct; the compressed air cannot pass from the disable mechanism duct to the lower duct.
2. due to the structure of the stopper, the manipulation of the handle may cause the control shaft and the stopper to be forced apart, thereby creating a gap therebetween; air pent in the lower duct can thus vent via the gap.
3. the control shaft whilst rotating by the manipulation of the handle, also moves down [parallel to the axis of rotation], and consequently mechanically closes the valve [e.g., pushes down a diaphragm].
These actions work together to close the valve.

In some embodiments, supplied pressurized air travels through the handle positioner, continues through an upper duct of the control shaft, into a stopper duct of the threaded stopper and subsequently into a pneumatic disable mechanism having a disable mechanism duct passing therethrough. Thereafter the pressurized air may continue back into the lower duct of the control shaft extending to outside the control shaft, and throughout to a main body of the valve, if the lower duct and the disable mechanism duct are aligned, or is blocked when the lower duct and the disable mechanism duct are not aligned.

The spring below the control shaft holds the bearing spheres sitting within designated grooves of the control shaft and the sloped channel of the threaded stopper by keeping the control shaft and the threaded stopper together. The bearing spheres and angled groove are configured to create an internal locking mechanism of the system, preventing unwanted rotation of the control shaft. The angled grooves are split up into 3 sections. The first and last sections are perpendicular to the axis of rotation while the middle segment is sloped, the size of the angles of the three sections varies in different embodiments. This custom design creates a degree of safety in the perpendicular regions of the groove in which the rotation of the control shaft in either direction, opening and closing, will not cause the system to change from its enabled or disabled position.

The above summary merely explains major principles of structure and operation of the novel valve and method of operation and use. The summary should not be considered to limit the claimed invention, the scope of the invention should only be determined by the scope of the claims.

During the description below, the following terms are used to describe the embodiments:
Essentially sealing refers to a situation in which a negligible amount of internal air escapes into the environment.

The status of the system refers to the valve's state being open or closed. An open state means that a process fluid can flow through the valve, and a closed state means that the flow of the process fluid is essentially blocked.

Pneumatic means refer to devices and systems that provide pressurized air to the disclosed valve.

In some embodiments the valve is further configured to allow forcing the handle in a second direction opposite to the first direction, thereby moving the internal safety mechanism through at least the second stage and subsequently the first stage.

In some embodiments the valve is further configured to allow moving the internal safety mechanism through an intermediary stage.

Some embodiments further comprise a piston mechanically coupling the internal safety mechanism to the diaphragm; wherein during the first stage the internal safety mechanism pushes the piston against the diaphragm.

According to the claimed invention, the internal safety mechanism comprises:
a pneumatic disable mechanism, a control shaft, and a series of ducts extending through the disable mechanism and the control shaft;
wherein the moving of the internal safety mechanism comprises moving the control shaft relative to the disable mechanism;
during the second stage the series of ducts is aligned.

In some embodiments the internal safety mechanism further comprises:
resilient means for urging the disable mechanism against the control shaft.

In some embodiments the internal safety mechanism further comprises:
sealing means for sealing in between the disable mechanism and the control shaft.

According to the claimed invention, the valve further comprises
a threaded stopper, the stopper comprising a stopper duct and a housing chamber, the stopper duct extending through a wall of the housing chamber and being a member of the ducts series;
   wherein the disable mechanism is situated within the housing chamber;
the disable mechanism comprising:
   a disable shaft comprising a disable mechanism duct;
   a disable spring for urging the disable shaft against the control shaft, and
at least one O-ring for sealing in between the disable mechanism duct and the control shaft duct when the disable mechanism duct and the control shaft duct are aligned.

In some embodiments, the threaded stopper further comprises;
at least one groove, each comprising a first region and a second region;
the internal safety mechanism comprising at least one bearing sphere, each held on the control shaft and situated in one of the at least one groove;
wherein turning the external handle causes the at least one bearing sphere to travel along the at least one groove;
when the at least one bearing sphere is in the first region the internal safety mechanism is moving through the first stage and when the at least one bearing sphere is in the second region the internal safety mechanism is moving through the second stage.

In some embodiments at least one groove further comprises an intermediary region; when the at least one bearing sphere is in the intermediary region the internal safety mechanism is moving through the intermediary stage.

### BRIEF DESCRIPTION OF THE FIGURES

For a better understanding of the invention and to show how it may be carried into effect, reference will now be made, by way of example, to the accompanying drawings in which one embodiment of the present invention is shown, thereby making apparent to those both skilled and unskilled in the art how the invention may be embodied in practice. It is stressed that the particulars shown are by way of example and for purposes of illustrative discussion only and are presented in the cause of providing what is believed to be the most useful and readily understood description of the principles and conceptual aspects of the invention. In this regard, no attempt is made to show structural details in more detail than is necessary for a fundamental understanding thereof. In the accompanying drawings:
**Figure 1** is a vertical cross-sectional view, showing a prior art automatic-and-manual operation composite valve.
**Figure 2** is a depiction of the assembly for one embodiment of a novel normally closed pneumatically actuated valve, illustrating some major mechanism parts.
**Figure 3** is a depiction of one embodiment, assembled into a normally closed pneumatically actuated valve, in the disabled position.
**Figure 4a** is an illustration of a closed, disabled pneumatically actuated valve.
**Figure 4b** is an illustration of the flow of air through a pneumatically actuated valve in its enabled state - the valve is open.
**Figure 5a** provides a schematic cross sectional side view of one embodiment of the assembly. The figure focuses on illustrating the internal chambers for air flow as well as the relationship between the ball and sloped grooves. The valve is closed.
**Figure 5b** provides a different schematic cross sectional side view of one embodiment of the control shaft and pneumatic disable mechanism, focusing on the sub parts of the pneumatic disable mechanism. The valve is closed.
**Figure 6** provides a close-up description of a control shaft in the assembly, specifically the ball and its housing.
**Figure 7** is an internal illustration of a threaded stopper in the assembly, highlighting the sloped groove and the change of angles within.
**Figure 8a** provides a bottom view of the stopper;
**Figure 8b** provides a cross-sectional side view of the threaded stopper focusing on an angled duct for the flow of air and an orifice used for housing the pneumatic disable mechanism.

### DETAILED DESCRIPTION

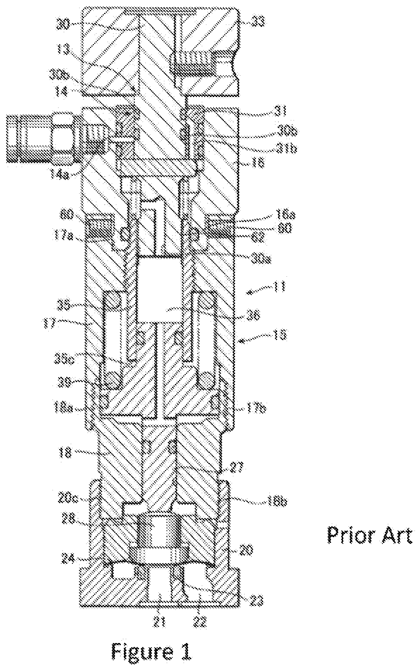

**Figure 1** is a vertical cross-sectional view of a prior art composite valve, in which a valve body includes a diaphragm, "valve body" **24**. The valve is in a "closed" state, as the diaphragm **24** is in closed state:
According to the state of the diaphragm **24** the upstream flow path **22** and the downstream flow path **21** are connected or disconnected.

A slide body **28** is urged towards the diaphragm **24** and thereby pushing the diaphragm **24** down against a valve seat **23**.

In a valve main body **11**, a spring **39**, having a snapping force for snapping a piston **27** in a direction of closing the diaphragm **24**, is attached between an intermediate casing **17** and the piston **27** and normally energizes the piston **27** elastically to maintain a closed state of the diaphragm **24**.

The piston **27** slides in a direction apart from the diaphragm **24** in response to supplied operation air passing through the through hole **30a** of a stem **30** and supplied into and discharged from a first air chamber **36** in the valve main body **11** to enable the valve to be opened and closed.

The valve has a manual operation-mechanism portion **13** which includes a manual operation handle **33**, a stem **30** and a pair of O-rings **30b** attached to the outer periphery of the stem **30**. Pressing operation of the manual operation handle 33 allows purging the operation air within the valve main body **11**.

The composite valve supplies the operation air to one side of the piston **27** provided within the valve main body **11** to allow the piston **27** to move upward, thereby disconnecting the diaphragm **24** from the valve seat **23**, and utilizing the pressing operation of the manual operation mechanism portion **13** to close the air switch valve and purge the operation air within the valve main body **11**.

A casing **15** includes an upper casing **16**, an intermediate casing **17** and a lower casing **18**. An annular protruding portion **16a** of the upper casing **16** is fastened and firmly fixed to an annular recess portion **17a** of the intermediate casing **17** with a locking screw **60** in a state in which the annular protruding portion **16a** is fitted to the annular recess portion **17a**. On the other hand, the intermediate casing **17** and the lower casing **18** are firmly fixed to each other by screw engagement between a female thread **17b** formed in the intermediate casing **17** and a male thread **18a** formed on the lower casing **18**. Further, a base **20** is firmly fixed by screw engagement between a female thread portion 20c of the base **20** and a male thread portion **18b** formed on a lower portion of the lower casing **18**.

An outer peripheral thread structure is formed, including a pressing member 35 and a male thread **18a**. This structure enables the pressing member **35** to be moved upwards and downwards with respect to the intermediate casing **17** when rotating the pressing member **35**. The pressing member **35** is moved in an axial direction within the valve main body **11** to press the piston **27** against a lower end portion **35c** of the pressing member **35**.

The operation handle **33** shown in Figure 1 is in an open state in which the operation air can be supplied and exhausted and in a state in which the opening and closing operation of the diaphragm **24** can be executed with the air switch valve portion **14**. In cases in which the manual operation handle **33** is in a closed state, the air switch valve portion **14** provided within the valve main body **11** stops supplying the operation air to the valve main body **11** via the manual operation mechanism portion **13**.

In **Figure 1**, when pressing the manual operation handle **33** downward, the stem **30** connected to the manual operation handle **33** slides with respect to the annular member **31** fitted to the upper casing **16**. At this time, the air supply port **14a** is sealed by the O-ring **30b** attached to the stem **30**, whereby it is possible to forcibly stop supplying the operation air to the manual operation mechanism portion **13**. Furthermore, at this time, since the purge hole **31b** which has been sealed by the O-ring **30b** before operating the manual operation handle **33** is communicated with the ambient air, the operation air stored in the valve main body **11**, such as in the through hole **30a** of the stem **30**, is discharged through a purge hole **31b**. Further, when the rotating operation of the manual operation handle **33** in the pressed state is executed, the pressing member **35** is going to rotate because the stem **30** and the pressing member **35** are coupled by means of the connection portion **62**.

We now turn to describing some of our embodiments that provide solutions to important yet apparently previously unappreciated safety problems. Our embodiments share some common features with the prior art device described above but have additional uniquely designed features such as solving problems of inadvertent opening/closing of a valve.

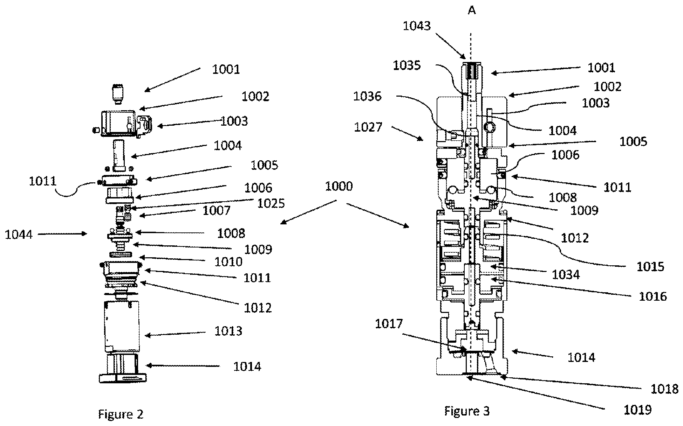

**Figure 2** is an exploded view showing the assembly of a normally closed pneumatically actuated valve embodiment **1000** with position locking capability.

**Figure 3** illustrates a cross sectional view of the assembled embodiment **1000** in a disabled position.

The valve **1000** comprises a diaphragm **1017.** When the diaphragm **1017** is pressed down the valve is mechanically closed, and when the diaphragm **1017** is not pressed down the valve is mechanically open, similar to the prior art valve described above.

The valve **1000** further comprises an external handle **1002,** an external latch **1003,** a threaded stopper **1006,** a pneumatic disable mechanism **1007,** a control shaft **1009,** a series of ducts **1043,** an upper guide **1012,** an actuator **1013** and a body **1014.** The parts are assembled and held in place with locking bolts **1011,** and first spring **1010,** second spring **1025** and third spring **1015** or other resilient means. The relationship and interaction between these and other components are described hereinbelow.

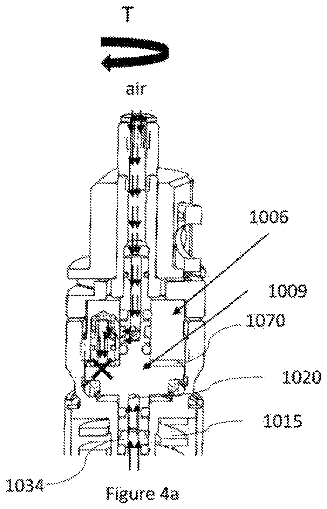

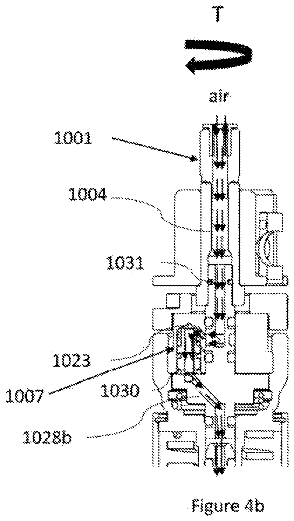

According to one aspect, a normally closed valve **1000** which may be opened by pneumatic means [providing pressurized air, see "air" in **Figures 4a****,** **4b****]** is provided.

The valve **1000** includes:
a seat 1016 that has a fluid inlet 1018 and a fluid outlet 1019;
a diaphragm **1017,** an external handle **1002** and an internal safety mechanism **1044** operationally coupled to the external handle **1002** and the diaphragm **1017.**

The internal safety mechanism **1044** is shown in a first stage in **Figure 4a** and in a second stage in **Figure 4b**.

The valve is configured to allow forcing the handle **1002** in a first direction (arrow **T),** thereby moving the internal safety mechanism **1044** through at least a first and subsequently a second stage;
wherein:
during the first stage a disabling of the flow of pressurized air to the diaphragm **1017,** and a releasing of pressured air from within the valve **1000** to the environment occur, causing the diaphragm **1017** and the valve **1000** to be and remain in a closed state.
during the second stage, the diaphragm **1017** and valve **1000** are in open states: there is a flow of pressurized air via pneumatic means through the internal safety mechanism **1044**, causing the diaphragm **1017** to transition to open state.

By the valve being in "closed state" we mean that a process fluid is essentially stopped from passing through the valve, by the diaphragm being in "closed state" we mean that the diaphragm is sufficiently pressed down to block passage of the process fluid through the valve. By the valve being in the "open state" we mean that a process fluid is essentially able to pass through the valve [body]. By the diaphragm being in "open state" we mean that the diaphragm is not sufficiently pushed down to block the passage of the process fluid.

The first stage and the second stage are not discrete points, i.e., the handle is substantially turned along a range within each stage, e.g., over a range of 20°, without any change to the state of the valve.

In some embodiments the valve **1000** is further configured to allow forcing the handle **1002** in a second direction opposite to the first direction **T,** thereby moving the internal safety mechanism **1007** through at least the second and subsequently first stage.

The valve **1000**, as illustrated in **Figure 3****,** includes a hollow control shaft **1009** rotatably mounted on a piston **1034 (****Figure 4a****).** The piston **1034** is mechanically coupling the internal safety mechanism to the diaphragm; wherein during the first stage the internal safety mechanism pushes the piston **1034** against the diaphragm.

The hollow control shaft **1009** is engaged with the hollow handle positioner **1004**. The pneumatic disable mechanism **1007** and the control shaft **1009** cooperate to allow: a) stopping the supply of the pressurized air to the control shaft **1009** and discharging the air from within the ducts series **1043** into the environment by manually rotating the control shaft **1009** about axis **A.** b) supplying the pressurized air to the control shaft, which can then push up the third spring **1015** that urges down the diaphragm **1017,** and not discharging the air from within the ducts series **1043** to the environment. Without this release there might be an unwanted opening of the diaphragm **1017** possibly releasing hazardous material.

In some embodiments the valve is further configured to allow the internal safety mechanism **1044** to go through a third stage that is intermediary between the first stage and the second stage. The valve **1000** may be further configured to allow forcing the handle **1002** in a second direction opposite to the first direction, **T,** thereby moving the internal safety mechanism **1044** through the second stage, subsequently the intermediary stage and subsequently the first stage, and similarly the handle **1002** can be forced in the first direction, the internal safety mechanism **1044** going through the first stage, the intermediate stage and then the second stage.

During the intermediate stage, the control shaft **1009** is being rotated and in preferred embodiments diaphragm **1017** and valve **1000** are in closed states: there is no flow of pressurized air via the pneumatic means through the internal safety mechanism **1044,** causing the diaphragm **1017** to remain in the closed state.

In some embodiments the internal safety mechanism **1044** comprises:
a pneumatic disable mechanism **1007,** a control shaft **1009,** and a series of ducts **1043** comprising a disable mechanism duct **1045** and a lower control shaft duct **1028b;**
wherein the moving of the internal safety mechanism **1044** comprises moving the control shaft **1009** relative to the disable mechanism **1007;**
the disable mechanism **1007** and the control shaft **1009** are positioned such that during the first stage the disable mechanism duct **1045** and the lower control shaft duct **1028b** are aligned and thus the series of ducts **1043** are aligned.

The internal safety mechanism **1044** in some embodiments further comprises:
First spring **1010** and second spring **1025** for urging against each other the pneumatic disable mechanism **1007** and the control shaft **1009,** such that when the disable mechanism duct **1045** and the lower control shaft duct **1028b** are aligned, leakage of pressurized air from between the disable mechanism duct **1045** and the lower control shaft duct **1028b,** if any, does not prevent opening the diaphragm **1017.**

The internal safety mechanism **1044** in some embodiments further comprises:
sealing means such as O-rings **1024** for sealing [reducing/eliminating leakage of pressurized air from] in between the disable mechanism duct **1045** and the lower control shaft duct **1028b** when the disable mechanism duct **1045** and the lower control shaft duct **1028b** are aligned.

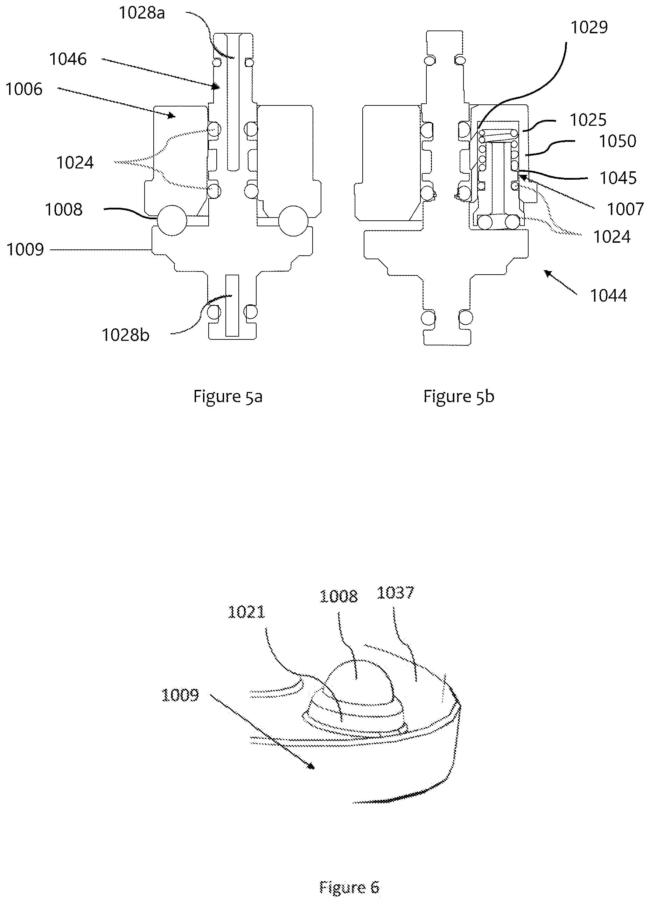

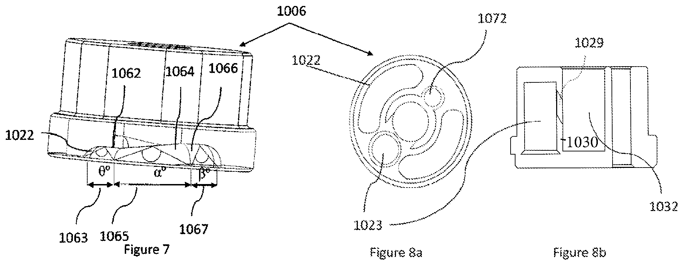

In some embodiments the valve further comprises a threaded stopper **1006,** the stopper **1006** comprising a stopper duct **1029 (****figure 8b****)** and a housing chamber **1023 (****figures 8a, 8b****),** the stopper duct **1029** extending through a wall **1030** of the housing chamber **1023** and being a member of the ducts series **1043 [****Figure 3****]**;
wherein the pneumatic disable mechanism **1007** is situated within the housing chamber **1023;**
the disable mechanism **1007** comprising:
   a disable shaft **1050 (****figure 5b****)** comprising the disable mechanism duct **1045;**
   first spring/resilient means **1010,** and second spring/resilient means **1025** for urging together the disable shaft **1050** and the control shaft **1009,** and
sealing means **1024** for sealing in between the disable mechanism duct **1045** and the lower control shaft duct **1028b** when the disable mechanism duct **1045** and the lower control shaft duct **1028b** are aligned.

In some embodiments the threaded stopper **1006** further comprises:
at least one groove **1022,** each comprising a first region **1062** and a second region **1066;**
the internal safety mechanism **1044** comprising at least one bearing sphere **1008,** each held on the control shaft **1009** and situated in at least one groove **1022;** wherein turning the external handle **1002** causes at least one bearing sphere **1008** to slide along at least one groove **1022;**
when the at least one bearing sphere **1008** is in the first region **1062** the internal safety mechanism **1044** is moving through the first stage and when the at least one bearing sphere **1008** is in the second region **1066** the internal safety mechanism **1044** is moving through the second stage;
wherein the first stage relates to turning the external handle **1002** through angle θ about an axis **A** proportionate in size to a length **1063** of the first region **1062,** and the second stage relates to turning the external handle **1002** through angle β proportionate in size to a length **1067** of the second region **1066.**

In some embodiments at least one groove **1022** further comprises an - intermediary region **1064**. When the at least one bearing sphere **1008** is in the intermediary region **1064** the internal safety mechanism **1044** is moving through the intermediate stage;
wherein the intermediate stage relates to turning the external handle **1002** through angle α proportionate in size to a length **1065** of the intermediary region **1064.**

The first and second regions **1062, 1066** are essentially coplanar and perpendicular to the rotation of axis **A.** Consequently, movement of the bearing spheres **1008** along the regions **1062, 1066** does not change the position of the control shaft **1009** in the direction of axis **A.** This feature is further explained below.

The handle positioner **1004** is housed inside of the handle **1002** and is directly connected to the air fitting inlet **1001** on a first end **1035** and on a second end **1036** to the control shaft **1009.** The control shaft **1009** is vertically held in place and urged upwards by the first compression spring **1010,** allowing the shaft **1009** to rotate around a central axis **A.** The control shaft **1009** has an ability of linear small length movements along the direction of the central axis A; not directly due to the movement of the handle **1002,** which may be able to move only in a direction perpendicular to the rotation axis A, but rather due to the movement of the shaft **1009** relative to a threaded stopper **1006,** as will be explained below.

The control shaft **1009** can be rotated about axis **A** with two bearing spheres **1008** below a threaded stopper **1006** along two sloped grooves **1022 (****Figure 8a****)** to ensure a smooth and directed movement acting as a bearing.

In the case of preventing flow of pressurized air to the closed diaphragm **1017,** due to the misalignment of the ducts series **1043,** turning of the handle **1002** about the axis **A** through the first and intermediary stages causes the diaphragm **1017** to remain in its closed status. The third stage of turning the handle **1002** about the axis **A** aligns the ducts series **1043,** allowing flow of the pressurized air to open the diaphragm **1017.**

**Figures 4a****,** **4b** further demonstrate how the pneumatic disable mechanism **1007** in this embodiment is kept in place within the hybrid valve **1000.**

**Figures 5a** and **5b** provide a detailed and internal schematic view of the threaded stopper **1006** and the control shaft **1009** as well as the pneumatic disable mechanism **1007.**

The control shaft **1009** is kept in place by the first spring **1010** underneath it. The first spring **1010** together with the second spring **1025** provide sufficient force in urging the control shaft **1009** against the threaded stopper **1006,** to maintain the valve **1000** in either its disabled/closed status **(****Figure 4a****)** or enabled/open status **(****Figure 4b****),** as determined by the user.

Through **figures 4a** and **4b** we can further understand the flow of air through the pneumatically actuated valve **1000** and the function of the described mechanism.

The air from pneumatic means may flow into the valve's control shaft **1009** through: the air fitting inlet **1001,** an internal duct of the handle positioner **1004,** and an upper control shaft duct **1028a** of the control shaft **1009,** detour through threaded stopper duct **1029,** down into the pneumatic disable mechanism housing chamber **1023,** through a disable mechanism duct **1045** of a disable mechanism shaft **1050 [****Figure 5b****],** and back into the control shaft **1009** through a lower control shaft duct **1028b [****Figure 4b****].**

**Figures 5a and 5b** show the valve **1000** in its closed state and they are an imperfect cross sections of the valves' **1000** closed state.

The control shaft **1009** and the threaded stopper **1006** are apart, no pressurized air reaches the bottom part of the valve **1000.**

When the valve **1000** is in a closed state, the air escapes in the gap between the control shaft **1009** and the threaded stopper **1006.**

As also shown in **Figures 8a** and **8b****,** the housing chamber **1023** is located between the threaded stopper **1006** and the control shaft **1009** (see **Figures 5a, 5b****),** and is sealed by two O-rings **1024** located in the chamber **1023 (****Figures 8a and 8b****)** which snugly engage the disable mechanism shaft **1050** with the housing chamber **1023.**

When the valve **1000** is in an open state, the control shaft **1009** and the threaded stopper **1006** are forced together by first spring **1010** and second spring **1025,** that push the pneumatic disable mechanism shaft **1050** against a face **1037 (****Figure 6****)** of the control shaft **1009** so that an O-ring **1024** is firmly held against the face **1037** and essentially seals the disable duct **1045** with control shaft lower duct **1028b.**

When the valve **1000** is in an open state, there is less escape of air, and the threaded stopper **1006** and the control shaft **1009** are aligned.

When the handle **1002** is slightly rotated [less than θ°] such as by an inadvertent knock, the disable mechanism duct **1045** and the lower control duct 1028b may remain partially aligned to allow flow of pressurized air therethrough, and the disable mechanism shaft 1050 and its O-ring **1024** may slide along the face **1037 (****Figure 6****)** of the control shaft **1009** when first rotating the handle **1002**.

In order to disable the valve **1000,** further rotating the handle [past θ°] **1002** further turns the control shaft **1009** such that the two bearing spheres **1008**, further travel along sloped groove **1022** (**Figure 8a**) and thus a gap **1070** is created between the face **1037** and the threaded stopper **1006** - compare **Figure 4a** to **Figure 4b**. The gap **1070** does communicate with the environment outside the valve **1000**. The lower duct **1028b** in the control shaft **1009** does not line up with the pneumatic disable mechanism duct **1045** but rather communicates with the gap **1070**, causing the air in the lower duct **1028b** and in the actuator **1013** to escape into the natural environment.

In addition, since the threaded stopper **1006** is immovable in the valve **1000**, the movement of the control shaft **1009** relative to the stopper **1006** translates into downward movement of the shaft, which in turn pushes down the piston **1034** and thereby pushes the diaphragm **1017** such as to mechanically close the valve **1000**.

When the control shaft **1009** is rotated back about **axis A** to enable the valve **1000,** the control shaft **1009** rises and stops pressing on the diaphragm **1017**. Simultaneously the pressurized air flowing through the pneumatic disable mechanism **1007** can now flow into the aligned shaft **1009** and into the actuator **1013** as depicted in **Figure 4b**, thereby together with the rise of the control shaft allowing the diaphragm **1017** to rise and the valve **1000** to open.

The four ducts **1045**, **1028a**, **1028b** and **1029** are members of the series of ducts **1043**. The valve **1000** is configured to allow the pressurized air to continue flowing to the diaphragm **1017** despite turning the handle **1002** about the axis **A,** and respectively turning the control shaft **1009,** during the second stage; alignment of the ducts **1028a, 1028b, 1029** and **1045** is essentially maintained and leak from the series of ducts **1043** is prevented by the action of the second spring **1025** on the O-rings **1024.**

The nozzle **1046** of the control shaft **1009** fits into the middle hole **1032** of the threaded stopper **1006** and the two bearing spheres **1008** fit into the sloped grooves **1022.** The threaded stopper **1006** is held in position by external screws **1011,** ensuring that it experiences no vertical and rotational movement. The control shaft **1009** is held in place by the first compression spring **1010,** ensuring that the threaded stopper **1006** and the control shaft **1009** are engaged thereto. The control shaft **1009** can rotate around axis **A** as dictated by the change in angles from one end of the sloped groves **1022 (****Figure 7****)** to the other. The valve's state changes from disabled/closed **(****Figure 4a****)** to enabled/open **(****Figure 4b****)** and vice versa. The system will not change status while the bearing spheres **1008** are still in the first **1062** or second **1066** regions, as marked in **Figure 7****,** providing an additional safety for the user, preventing the valve **1000** from changing from a closed **(****Figure 4a****)** to open status **(****Figure 4b****)** and vice versa due to inadvertent/unintended small movements of the handle **1002.**

**Figures 6****,** **7** and **8a, 8b** provide **additional** views of the control shaft **1009** and threaded stopper **1006,** showing the internal duct **1029** of the threaded stopper **1006** and a hole **1032** through which part of the control shaft **1009** extends, and provides a better idea of the mechanical design of the disable mechanism **1044.**

Note that below the control shaft all the parts of the valve are standard. Therefore, the novel parts may be retrofitted onto various valve bodies.

At present we believe that these embodiments operate best, but the other embodiments are also satisfactory.

An external latch **1003** is included in most embodiments of the pneumatically actuated valve **1000** as depicted in **Figures 2-8****.** It is used for locking the valve in closed state, in situations of additional needed safety for example during maintenance of the valve **1000** and/or of equipment in the vicinity of the valve **1000.**

An installation hole **1072** extending through the threaded stopper **1006,** and shown in Figure 8a, may be used to help construct the valve **1000** or to properly retrofit the new mechanism on a commercially available valve. A screw or bolt (not shown) may be inserted to help fixate the control shaft **1009**during the assembly so that it doesn't inadvertently rotate to a wrong position.

It will be appreciated that other embodiments may significantly depart from the illustrated structures and perform similar operations to the same effect, subject to the scopes of the claims, but all of these other embodiments are to the best of our knowledge presently unknown and are not commercially available.

## Claims

1. A normally closed valve **(1000)** comprising:
a seat **(1016)** that has a fluid inlet **(1018)** and a fluid outlet **(1019)**;
a diaphragm **(1017),** an external handle **(1002)** and an internal safety mechanism **(1044)** operationally coupled to the external handle and the diaphragm;
wherein the valve is configured to allow forcing the handle in a first direction, thereby moving the internal safety mechanism through at least a first and subsequently a second stage;
wherein
during the first stage:
the diaphragm is pressed onto the seat,
flow of pressurized air through the internal safety mechanism is blocked, and
air pent in the valve is vented,
causing the valve to be and remain in a closed state;
during the second stage:
flow of pressurized air through the internal safety mechanism is allowed, the pressurized air after passing therethrough, acting against the pressing of the diaphragm onto the seat, and a venting of air is reduced,
causing the valve to be and remain in an open state,
**characterized in that**
the internal safety mechanism comprises a pneumatic disable mechanism, a control shaft, and a series of ducts extending through the disable mechanism and the control shaft;
wherein the moving of the internal safety mechanism comprises moving the control shaft relative to the disable mechanism;wherein during the second stage the series of ducts is aligned;
and **in that**
the valve further comprises a threaded stopper, the stopper comprising a stopper duct and a housing chamber, the stopper duct extending through a wall of the housing chamber and being a member of the ducts series;
wherein the disable mechanism is situated within the housing chamber;
wherein the disable mechanism comprises:
a disable shaft comprising a disable mechanism duct;
a disable spring for urging the disable shaft against the control shaft, and
at least one O-ring for sealing in between the disable mechanism duct and the control shaft duct when the disable mechanism duct and the control shaft duct are aligned.

2. The valve of claim 1, wherein the valve is further configured to allow forcing the handle in a second direction opposite to the first direction, thereby moving the internal safety mechanism through at least the second stage and subsequently the first stage.

3. The valve of claim 1 or 2, wherein the valve is further configured to allow moving the internal safety mechanism through an intermediary stage.

4. The valve of claim 3, wherein during the intermediate stage, the valve is in a closed state.

5. The valve of any one of claims 1 to 4, further comprising a piston **(1034)** mechanically coupling the internal safety mechanism to the diaphragm; wherein during the first stage the internal safety mechanism pushes the piston against the diaphragm.

6. The valve of claim 1, the internal safety mechanism further comprising:
resilient means for urging the disable mechanism against the control shaft.

7. The valve of claim 1 or 6, the internal safety mechanism further comprising:
sealing means for sealing in between the disable mechanism and the control shaft.

8. The valve according to claim 1, the threaded stopper further comprising;
at least one groove **(1022)**, each comprising a first region **(1062)** and a second region **(1066)**;
the internal safety mechanism comprising at least one bearing sphere **(1008)**, each held on the control shaft and situated in one of the at least one groove;
wherein turning the external handle causes the at least one bearing sphere to travel along the at least one groove;
when the at least one bearing sphere is in the first region the internal safety mechanism is moving through the first stage and when the at least one bearing sphere is in the second region the internal safety mechanism is moving through the second stage.

9. The valve according to claim 8, at least one groove further comprising an intermediary region **(1064);**
when the at least one bearing sphere is in the intermediary region the internal safety mechanism is moving through the intermediary stage.

## Patentansprüche

1. Ein normalerweise geschlossenes Ventil **(1000),** das Folgendes beinhaltet:
einen Sitz **(1016),** der einen Fluideinlass **(1018)** und einen Fluidauslass **(1019)** aufweist;
eine Membran **(1017),** einen externen Griff **(1002)** und einen internen Sicherheitsmechanismus **(1044),** der mit dem externen Griff und der Membran wirkgekoppelt ist;
wobei das Ventil konfiguriert ist, um zu ermöglichen, dass der Griff in eine erste Richtung gezwungen wird, wodurch der interne Sicherheitsmechanismus durch mindestens eine erste und anschließend eine zweite Stufe bewegt wird;
wobei
während der ersten Stufe:
die Membran auf den Sitz gedrückt wird,
der Strom von Druckluft durch den internen Sicherheitsmechanismus blockiert wird, und Luft, die in dem Ventil aufgestaut ist, entlüftet wird,
wodurch bewirkt wird, dass das Ventil in einem geschlossenen Zustand ist und bleibt; während der zweiten Stufe:
der Strom von Druckluft durch den internen Sicherheitsmechanismus ermöglicht wird, wobei die Druckluft, nachdem sie durch ihn hindurchgetreten ist, gegen das Drücken der Membran auf den Sitz wirkt, und ein Entlüften von Luft verringert wird,
wodurch bewirkt wird, dass das Ventil in einem offenen Zustand ist und bleibt,
**dadurch gekennzeichnet, dass**
der interne Sicherheitsmechanismus einen pneumatischen
Deaktivierungsmechanismus, eine Steuerwelle und eine Reihe von Kanälen, die sich durch den Deaktivierungsmechanismus und die Steuerwelle erstrecken, beinhaltet;
wobei das Bewegen des internen Sicherheitsmechanismus das Bewegen der Steuerwelle relativ zu dem Deaktivierungsmechanismus beinhaltet; wobei während der zweiten Stufe die Reihe von Kanälen ausgerichtet wird;
und dadurch, dass
das Ventil ferner einen Gewindestopfen beinhaltet, wobei der Stopfen einen Stopfenkanal und eine Gehäusekammer beinhaltet, wobei sich der Stopfenkanal durch eine Wand der Gehäusekammer erstreckt und der Reihe von Kanälen angehört;
wobei der Deaktivierungsmechanismus innerhalb der Gehäusekammer situiert ist;
wobei der Deaktivierungsmechanismus Folgendes beinhaltet:
eine Deaktivierungswelle, die einen Deaktivierungsmechanismuskanal beinhaltet;
eine Deaktivierungsfeder zum Pressen der Deaktivierungswelle gegen die Steuerwelle, und
mindestens einen O-Ring zum Abdichten zwischen dem Deaktivierungsmechanismuskanal und dem Steuerwellenkanal, wenn der Deaktivierungsmechanismuskanal und der Steuerwellenkanal ausgerichtet werden.

2. Ventil gemäß Anspruch 1, wobei das Ventil ferner konfiguriert ist, um zu ermöglichen, dass der Griff in eine zweite Richtung entgegengesetzt zu der ersten Richtung gezwungen wird, wodurch der interne Sicherheitsmechanismus durch mindestens die zweite Stufe und anschließend die erste Stufe bewegt wird.

3. Ventil gemäß Anspruch 1 oder 2, wobei das Ventil ferner konfiguriert ist, um zu ermöglichen, dass der interne Sicherheitsmechanismus durch eine Zwischenstufe bewegt wird.

4. Ventil gemäß Anspruch 3, wobei sich das Ventil während der Zwischenstufe in einem geschlossenen Zustand befindet.

5. Ventil gemäß einem der Ansprüche 1 bis 4, das ferner einen Kolben **(1034)** beinhaltet, der den internen Sicherheitsmechanismus mechanisch mit der Membran koppelt; wobei der interne Sicherheitsmechanismus den Kolben während der ersten Stufe gegen die Membran stößt.

6. Ventil gemäß Anspruch 1, wobei der interne Sicherheitsmechanismus ferner Folgendes beinhaltet:
ein elastisches Mittel zum Pressen des Deaktivierungsmechanismus gegen die Steuerwelle.

7. Ventil gemäß Anspruch 1 oder 6, wobei der interne Sicherheitsmechanismus ferner Folgendes beinhaltet:
ein Dichtungsmittel zum Abdichten zwischen dem Deaktivierungsmechanismus und der Steuerwelle.

8. Ventil gemäß Anspruch 1, wobei der Gewindestopfen ferner Folgendes beinhaltet:
mindestens eine Nut **(1022),** die jeweils einen ersten Bereich **(1062)** und einen zweiten Bereich **(1066)** beinhaltet;
wobei der interne Sicherheitsmechanismus mindestens eine Lagerkugel **(1008)** beinhaltet, die jeweils auf der Steuerwelle gehalten wird und in einer der mindestens einen Nut situiert ist;
wobei das Drehen des externen Griffs bewirkt, dass die mindestens eine Lagerkugel entlang der mindestens einen Nut reist;
wenn sich die mindestens eine Lagerkugel in dem ersten Bereich befindet, sich der interne Sicherheitsmechanismus durch die erste Stufe bewegt und, wenn sich die mindestens eine Lagerkugel in dem zweiten Bereich befindet, sich der interne Sicherheitsmechanismus durch die zweite Stufe bewegt.

9. Ventil gemäß Anspruch 8, wobei mindestens eine Nut ferner einen Zwischenbereich **(1064)** beinhaltet;
wenn sich die mindestens eine Lagerkugel in dem Zwischenbereich befindet, sich der interne Sicherheitsmechanismus durch die Zwischenstufe bewegt.

## Revendications

1. Une soupape normalement fermée **(1000)** comprenant :
un siège **(1016)** qui a une entrée de fluide **(1018)** et une sortie de fluide **(1019)** ;
un diaphragme **(1017),** un manche externe **(1002)** et un mécanisme de sécurité interne **(1044)** couplé de manière opérationnelle au manche externe et au diaphragme ;
la soupape étant configurée pour permettre de forcer le manche dans une première direction, mouvant ainsi le mécanisme de sécurité interne à travers au moins une première et ensuite une deuxième étape ;
dans laquelle
pendant la première étape :
le diaphragme est pressé sur le siège,
un écoulement d'air sous pression à travers le mécanisme de sécurité interne est bloqué, et
l'air contenu dans la soupape est évacué,
amenant la soupape à être et à rester dans un état fermé ;
pendant la deuxième étape :
un écoulement d'air sous pression à travers le mécanisme de sécurité interne est permis, l'air sous pression, après être passé à travers celui-ci, agissant contre la pression du diaphragme sur le siège, et une évacuation d'air est réduite,
amenant la soupape à être et à rester dans un état ouvert,
**caractérisée en ce que**
le mécanisme de sécurité interne comprend un mécanisme de désactivation pneumatique, un arbre de commande, et une série de conduits s'étendant à travers le mécanisme de désactivation et l'arbre de commande ;
dans laquelle le fait de mouvoir le mécanisme de sécurité interne comprend le fait de mouvoir l'arbre de commande par rapport au mécanisme de désactivation ; dans laquelle, pendant la deuxième étape, la série de conduits sont alignés ;
et **en ce que**
la soupape comprend en outre un butoir fileté, le butoir comprenant un conduit de butoir et une chambre de logement, le conduit de butoir s'étendant à travers une paroi de la chambre de logement et étant un élément de la série de conduits ;
dans laquelle le mécanisme de désactivation est situé à l'intérieur de la chambre de logement ;
dans laquelle le mécanisme de désactivation comprend :
un arbre de désactivation comprenant un conduit de mécanisme de désactivation ;
un ressort de désactivation destiné à solliciter l'arbre de désactivation contre l'arbre de commande, et
au moins un joint torique destiné à assurer l'étanchéité entre le conduit de mécanisme de désactivation et le conduit d'arbre de commande lorsque le conduit de mécanisme de désactivation et le conduit d'arbre de commande sont alignés.

2. La soupape de la revendication 1, la soupape étant en outre configurée pour permettre de forcer le manche dans une deuxième direction opposée à la première direction, mouvant ainsi le mécanisme de sécurité interne à travers au moins la deuxième étape et ensuite la première étape.

3. La soupape de la revendication 1 ou de la revendication 2, la soupape étant en outre configurée pour permettre de mouvoir le mécanisme de sécurité interne à travers une étape intermédiaire.

4. La soupape de la revendication 3, pendant l'étape intermédiaire, la soupape étant dans un état fermé.

5. La soupape de l'une quelconque des revendications 1 à 4, comprenant en outre un piston **(1034)** couplant mécaniquement le mécanisme de sécurité interne au diaphragme ; dans laquelle, pendant la première étape, le mécanisme de sécurité interne pousse le piston contre le diaphragme.

6. La soupape de la revendication 1, le mécanisme de sécurité interne comprenant en outre :
un moyen élastique destiné à solliciter le mécanisme de désactivation contre l'arbre de commande.

7. La soupape de la revendication 1 ou de la revendication 6, le mécanisme de sécurité interne comprenant en outre :
un moyen d'étanchéité destiné à assurer l'étanchéité entre le mécanisme de désactivation et l'arbre de commande.

8. La soupape selon la revendication 1, le butoir fileté comprenant en outre :
au moins une rainure **(1022),** chacune comprenant une première région **(1062)** et une deuxième région **(1066) ;**
le mécanisme de sécurité interne comprenant au moins une sphère de palier **(1008),** chacune étant maintenue sur l'arbre de commande et située dans l'une de l'au moins une rainure ;
dans laquelle le fait de tourner le manche externe amène l'au moins une sphère de palier à se déplacer le long de l'au moins une rainure ;
lorsque l'au moins une sphère de palier est dans la première région, le mécanisme de sécurité interne se meut à travers la première étape et lorsque l'au moins une sphère de palier est dans la deuxième région, le mécanisme de sécurité interne se meut à travers la deuxième étape.

9. La soupape selon la revendication 8, au moins une rainure comprenant en outre une région intermédiaire **(1064)** ;
lorsque l'au moins une sphère de palier est dans la région intermédiaire, le mécanisme de sécurité interne se meut à travers l'étape intermédiaire.
